(19) Europäisches Patentamt
European Patent Office
Office européen des brevets

(11) EP 2 174 711 B1

(12) **FASCICULE DE BREVET EUROPEEN**

(45) Date de publication et mention de la délivrance du brevet:
**19.09.2018 Bulletin 2018/38**

(21) Numéro de dépôt: **09172226.4**

(22) Date de dépôt: **05.10.2009**

(51) Int Cl.:
***B01J 23/85*** *(2006.01)* ***B01J 23/94*** *(2006.01)*
***B01J 31/02*** *(2006.01)* ***B01J 37/02*** *(2006.01)*
***B01J 37/20*** *(2006.01)* ***B01J 38/12*** *(2006.01)*
***B01J 38/52*** *(2006.01)* ***B01J 38/62*** *(2006.01)*
***C10G 45/08*** *(2006.01)*

(54) **PROCÉDÉ DE RÉGÉNÉRATION DE CATALYSEURS DE TRAITEMENT D'HYDROCARBURES.**

REGENERIERUNGSVERFAHREN VON KATALYSATOREN ZUR AUFBEREITUNG VON KOHLENWASSERSTOFFEN

METHOD FOR REGENERATING HYDROCARBON PROCESSING CATALYSTS.

(84) Etats contractants désignés:
**AT BE BG CH CY CZ DE DK EE ES FI FR GB GR HR HU IE IS IT LI LT LU LV MC MK MT NL NO PL PT RO SE SI SK SM TR**

(30) Priorité: **10.10.2008 FR 0856884**

(43) Date de publication de la demande:
**14.04.2010 Bulletin 2010/15**

(73) Titulaire: **EURECAT SA.**
**07800 La Voulte-sur-Rhône (FR)**

(72) Inventeurs:
- **Galliou, Pauline**
  **07360, Dunières sur Eyrieux (FR)**
- **Nagy, Eric**
  **07800 Charmes (FR)**
- **Dufresne, Pierre**
  **26000 Valence (FR)**

(74) Mandataire: **Casalonga, Axel**
**Casalonga & Partners**
**Bayerstrasse 73**
**80335 München (DE)**

(56) Documents cités:
**EP-A- 0 300 629** **EP-A- 0 357 295**
**EP-A- 0 496 592** **WO-A-01/02092**
**US-A- 5 017 535**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

EP 2 174 711 B1

## Description

La présente invention concerne un procédé pour régénérer des catalyseurs destinés au traitement d'hydrocarbures dans le domaine notamment du raffinage pétrolier et de la pétrochimie.

La présente demande concerne plus précisément un procédé destiné à régénérer des catalyseurs usés d'hydrotraitement et/ou d'hydroconversion d'hydrocarbures, afin de leur restituer un niveau d'activité satisfaisant, au moins approchant de celui d'un catalyseur neuf.

La présente invention concerne également les catalyseurs régénérés obtenus par ce procédé.

La présente invention concerne enfin l'utilisation d'additifs particuliers afin d'augmenter l'activité de ces catalyseurs.

Les procédés de traitement des hydrocarbures effectués dans les raffineries et/ou les unités de pétrochimie incluent un certain nombre de traitements réalisés en présence d'hydrogène, et qui sont destinés à modifier la structure des molécules d'hydrocarbures et/ou à éliminer des coupes hydrocarbonées des composés indésirables tels que notamment les composés soufrés, azotés, aromatiques. Peuvent être cités, à titre d'exemples non limitatifs, les procédés d'hydrocraquage, de réformage, d'hydrogénation, et les procédés dits d'hydrotraitement tels que les procédés d'hydrodésulfuration, d'hydrodéazotation, d'hydrodéaromatisation, d'hydrodémétallation.

Ces procédés font appel à des catalyseurs spécifiques, qui comprennent un support poreux à base d'un ou plusieurs oxydes inorganiques réfractaires, sur lequel sont déposés un ou plusieurs métaux catalytiquement actifs, comprenant au moins un métal du groupe VIII de la classification périodique des éléments, généralement associé à un ou plusieurs métaux du groupe VIB.

Au cours de leur utilisation, ces catalyseurs se désactivent progressivement, notamment du fait du dépôt à leur surface de coke, c'est-à-dire d'un mélange d'hydrocarbures lourds, de résidus de carbone, d'impuretés métalliques.

Dans un souci d'économie et de préservation de l'environnement, on cherche désormais de plus en plus à réutiliser ces catalyseurs après leur cycle d'utilisation.

Ont ainsi été mis au point des procédés dits de régénération, qui consistent à traiter les catalyseurs usés afin de restaurer leur activité à un niveau suffisant pour permettre leur réemploi.

La régénération des catalyseurs usés est traditionnellement effectuée par combustion du coke, en chauffant le catalyseur à une température élevée en présence d'un gaz contenant de l'oxygène. Elle peut être réalisée in situ (c'est-à-dire, directement dans l'unité, après arrêt de celle-ci), ou ex situ (c'est-à-dire après déchargement du catalyseur hors de l'unité).

Cependant, dès leur première régénération, ces catalyseurs présentent une activité parfois nettement inférieure à leur activité initiale à l'état neuf.

C'est pourquoi ont été développés récemment des procédés dits de réjuvénation, dans lesquels les catalyseurs régénérés sont imprégnés d'un additif organique, dans le but de ramener leur activité à un niveau le plus proche possible de celui d'un catalyseur neuf.

Ainsi, la demande de brevet WO 96/41848 décrit un procédé d'activation d'un catalyseur d'hydrotraitement comprenant un oxyde d'un métal du groupe VIII et un oxyde de métal du groupe VI déposés sur un support. Selon ce procédé, le catalyseur est mis au contact d'un additif, qui est un composé comprenant au moins 2 groupements hydroxyle et de 2 à 10 atomes de carbone, ou un (poly)éther d'un tel composé, puis le catalyseur est séché dans des conditions telles que au moins 50% de l'additif reste présent sur le catalyseur.

Ce procédé s'applique tant à un catalyseur neuf dont on souhaite augmenter l'activité, qu'à un catalyseur usé, qui a auparavant subit une étape de régénération. Les additifs préférés sont l'éthylène-glycol, le diéthylène-glycol et les polyéthylène-glycols.

La demande de brevet EP 0 882 503 décrit un procédé de régénération d'un catalyseur usé comprenant un support à base d'alumine gamma et d'alumine amorphe, imprégné d'un ou plusieurs métaux catalytiquement actifs, dans lequel :

(1) le catalyseur usé est traité pour enlever les dépôts carbonés ;
(2) le support ainsi traité est mouillé au moyen d'un agent chélatant dans un liquide de support;
(3) le support ainsi mouillé subit une phase de vieillissement ;
(4) le support est séché de manière à évaporer le liquide de support ;
(5) le support ainsi séché est calciné.

Les agents chélatants cités sont l'acide éthylènediaminetétraacétique (EDTA) et ses dérivés tels que par exemple le N-hydroxy-EDTA et le diammonium-EDTA, le tri(2-aminoéthyl) amine, le triéthylènetétraamine, l'acide diéthylènetriaminepentaacétique, l'acide cyclohexanediaminetétraacétique, l'acide tétraacétique N,N'-éthylèneglycol-bis-(beta-aminoéthyléther), et le tétraéthylènepentaamine.

La demande de brevet WO 01/02092 décrit un procédé pour régénérer et réjuvéner un catalyseur additivé usé,

comprenant une étape de régénération du catalyseur par mise en contact avec un gaz oxygéné à une température maximale de 500°C, puis une étape de réjuvénation du catalyseur par mise contact de celui-ci avec un additif organique, éventuellement suivie d'un séchage à une température telle que au moins 50% de l'additif reste présent sur le catalyseur.

La température de régénération est de préférence comprise entre 350 et 425°C. L'additif organique employé dans ce procédé peut être tout composé comprenant au moins un atome de carbone et un atome d'hydrogène.

US5017535 décrit l'utilisation d'un additif selon la formule générale "$X-R^1-S-R^2-_pS-R^3-Y$", pour obtenir un catalyseur de haute performance. Cependant, les méthodes décrites dans l'art antérieur présentent un certain nombre d'inconvénients, et notamment elles ne permettent pas toujours de parvenir à un niveau d'activité satisfaisant pour le catalyseur recyclé.

Le but de la présente invention est de proposer une méthode améliorée pour régénérer les catalyseurs usés à base de métaux des groupes VIII et VIB, qui permette de remédier aux inconvénients des méthodes de l'art antérieur et d'obtenir un niveau d'activité au moins équivalent, voire supérieur.

La Demanderesse a constaté que cet objectif était atteint au moyen d'un procédé mettant en oeuvre la combinaison de deux étapes, une première étape de combustion du coke dans des conditions de température contrôlées, suivie d'une deuxième étape de dépôt d'un additif particulier à la surface du catalyseur.

Ainsi, la présente invention a pour objet un procédé de régénération d'un catalyseur contenant au moins un métal du groupe VIII et au moins un métal du groupe VIB déposés sur un support d'oxyde réfractaire, comprenant :

- au moins une première étape de traitement thermique du catalyseur, en présence d'oxygène et à une température allant de 350°C à 550°C ;
- au moins une seconde étape de dépôt, à la surface du catalyseur, d'un ou plusieurs additif(s) de formule (I) :

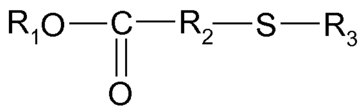

(I)

dans laquelle :

- $R_1$ désigne un atome d'hydrogène ou un groupement hydrocarboné linéaire ou ramifié, saturé ou insaturé, comprenant de 1 à 30 atomes de carbone;
- $R_2$ désigne un groupement hydrocarboné divalent linéaire ou ramifié, saturé ou insaturé, comprenant de 1 à 30 atomes de carbone, et pouvant en option contenir un ou plusieurs héréroatome(s) choisi(s) parmi les atomes d'oxygène et d'azote;
- $R_3$ désigne un groupement hydrocarboné linéaire ou ramifié, saturé ou insaturé, comprenant de 1 à 30 atomes de carbone.

Le procédé selon l'invention permet de restituer au catalyseur un excellent niveau d'activité, supérieur à celui constaté avec certains procédés de l'art antérieur.

En outre, les additifs de formule (I) sont faciles à mettre en oeuvre.

Enfin, par rapport aux procédés de régénération décrits dans l'art antérieur, le procédé selon l'invention s'est avéré présenter l'avantage supplémentaire de conduire à une pré-sulfuration du catalyseur.

En effet, les catalyseurs à base de métaux des groupes VIII et VIB sont actifs sous forme de sulfures métalliques. C'est pourquoi, immédiatement avant l'emploi du catalyseur, l'on procède usuellement à une sulfuration de celui-ci, dans le but d'activer les sites catalytiques métalliques par transformation des oxydes métalliques en sulfures métalliques.

Cette sulfuration est effectuée par mise en contact du catalyseur avec un ou plusieurs agents de sulfuration tels que notamment le sulfure d'hydrogène, le soufre élémentaire, le $CS_2$, les composés organiques soufrés tels que les mercaptans, les sulfures, les polysulfures, les coupes d'hydrocarbures contenant naturellement des composés soufrés, et/ou enrichies en composés soufrés.

Le procédé selon la présente invention s'est avéré permettre d'effectuer simultanément, outre la régénération proprement dite du catalyseur, une première fixation du soufre, et ce au moyen d'un seul et même additif. Ceci permet l'obtention d'un catalyseur régénéré qui se présente sous forme pré-sulfurée.

Ainsi, le procédé selon l'invention permet de faciliter sensiblement le traitement de sulfuration final effectué au moment de l'emploi du catalyseur recyclé.

Le procédé selon la présente invention comporte une première étape de traitement thermique du catalyseur, qui consiste en un chauffage de celui-ci à une température allant de 350°C à 550°C, en présence d'oxygène. Cette étape a pour but d'éliminer le coke présent à la surface du catalyseur, par combustion de celui-ci.

Le contrôle strict de la température au sein du catalyseur est essentiel lors de cette étape. La température doit en effet être suffisamment élevée pour permettre une combustion aussi complète que possible du coke. Cependant, elle ne doit pas dépasser 550°C, et ce même localement, car cela aurait pour effet d'endommager le catalyseur par exemple en dégradant la porosité de celui-ci.

De préférence, la première étape de traitement thermique est effectuée à une température inférieure ou égale à 530°C, et de manière préférée inférieure ou égale à 520°C.

Selon un mode de réalisation particulier de l'invention, la première étape de traitement thermique est effectuée, en totalité ou en partie, à une température supérieure à 500°C, et inférieure ou égale à 550°C.

Ce mode de réalisation particulier permet d'éliminer de manière plus rapide et plus complète le coke et autres impuretés. Cependant, ceci nécessite un contrôle précis de la température, de manière à ce que celle-ci ne dépasse pas, localement, 550°C.

La température au sein du catalyseur peut être contrôlée, de manière connue en soi, par exemple au moyen de thermocouples disposés de manière appropriée dans la masse du catalyseur.

La première étape est effectuée en présence d'oxygène, par exemple au moyen d'un flux de gaz contenant de l'oxygène. Ce gaz peut être constitué par exemple d'air, pur ou mélangé à de l'oxygène additionnel ou à un gaz inerte, de manière à augmenter ou diminuer la teneur de l'air en oxygène. Ce gaz peut également être constitué d'un mélange d'oxygène et de gaz inerte tel que l'azote, ou d'autres mélanges gazeux comprenant de l'oxygène.

La teneur en oxygène du gaz est de préférence contrôlée, de manière à mieux contrôler la température de combustion. Cette teneur peut être fixe, ou au contraire varier au cours du temps lors de la première étape.

Le débit de gaz est également contrôlé, de façon à contrôler la combustion.

La première étape peut comprendre plusieurs phases, effectuées à des températures différentes et/ou en présence de quantités variables d'oxygène.

La durée totale de cette première étape dépend généralement de la quantité de catalyseur à traiter, de la composition de celui-ci, de la quantité de coke présent à sa surface, et des conditions opératoires (température, teneur en oxygène). Cette durée est d'autant plus courte que la température est élevée. Elle est généralement comprise entre 0,1 et 20 heures, de préférence entre 0,2 et 10 heures.

Le procédé selon la présente invention comporte une seconde étape au cours de laquelle un ou plusieurs additif(s) de formule (I) est (sont) déposé(s) à la surface du catalyseur.

De préférence, le ou les additif(s) de formule (I) comprennent un seul atome de soufre.

De préférence, dans la formule (I), $R_1$ désigne un atome d'hydrogène ou un groupement hydrocarboné linéaire ou ramifié, saturé ou insaturé, comprenant de 1 à 8 atomes de carbone, et de préférence de 1 à 4 atomes de carbone.

De manière également préférée, $R_2$ désigne un groupement hydrocarboné divalent linéaire ou ramifié, saturé ou insaturé, comprenant de 1 à 8 atomes de carbone, de préférence de 1 à 6 atomes de carbone, et pouvant être substitué par un ou plusieurs groupements - OH, -OR, $-NH_2$, -NHR, -NRR', avec R et R' désignant des groupements alkyle comprenant de 1 à 4 atomes de carbone et de préférence 1 ou 2 atomes de carbone.

De manière également préférée, $R_3$ désigne un groupement hydrocarboné linéaire ou ramifié, saturé ou insaturé, comprenant de 1 à 8 atomes de carbone, et de préférence de 1 à 4 atomes de carbone.

Selon un mode de réalisation préféré, dans la formule (I) :

- $R_1$ désigne un atome d'hydrogène ou un groupement alkyle comprenant 1 ou 2 atomes de carbone, et de préférence $R_1$ désigne un atome d'hydrogène ;
- $R_2$ désigne un groupement alkyle comprenant de 1 à 5 atomes de carbone pouvant être substitué par un ou plusieurs groupements -OH;
- $R_3$ désigne un groupement alkyle comprenant 1 ou 2 atomes de carbone, et de préférence $R_1$ désigne un groupe méthyle.

Selon un mode de réalisation particulièrement préféré de l'invention, l'additif de formule (I) est l'acide 2-hydroxy 4-méthylthiobutanoïque, c'est-à-dire que dans la formule (I) : $R_1$ désigne un atome d'hydrogène, $R_2$ désigne un groupement $-CHOH-CH_2-CH_2-$, et $R_3$ désigne un groupe méthyle.

Ce mode de réalisation est particulièrement avantageux dans la mesure où l'additif est facile à préparer et peu onéreux, puisque c'est un composé voisin de l'acide aminé méthionine, et qui peut être synthétisé par des voies analogues.

En outre, cet additif présente l'avantage supplémentaire d'être parfaitement soluble dans l'eau, ce qui permet son emploi sous forme de solution aqueuse.

L'additif de formule (I) est déposé à la surface du catalyseur par mise en contact du catalyseur avec cet additif. L'on peut procéder de plusieurs manières, par exemple en mettant le catalyseur en contact avec l'additif pur (notamment sous forme liquide ou gazeuse), ou avec une composition contenant l'additif au sein d'un fluide porteur qui peut être liquide, gazeux ou supercritique. De préférence, l'additif de formule (I) est déposé en mettant le catalyseur au contact

d'une solution ou d'une suspension de l'additif dans un liquide porteur.

Ainsi, de manière particulièrement préférée, on procède par imprégnation du catalyseur au moyen d'une solution ou d'une dispersion de l'additif dans un liquide aqueux et/ou organique approprié.

Selon un mode de réalisation particulièrement avantageux de l'invention, le ou les additif(s) de formule (I) est (sont) déposé(s) sur le catalyseur par imprégnation avec une ou plusieurs solution(s) aqueuse(s) du (de ces) additif(s).

De préférence, la (les) solution(s) aqueuse(s) employée(s) ne comprend (comprennent) pas de co-solvant organique.

L'on peut procéder par imprégnation à sec du catalyseur (c'est-à-dire au moyen d'une solution dont le volume est inférieur ou égal au volume poreux du catalyseur), par imprégnation du catalyseur en présence d'un excès de solution, ou par trempage du catalyseur dans un excès de solution.

Cette mise en contact du catalyseur avec l'additif peut être instantanée ou durer jusqu'à 20 heures. De préférence, cette mise en contact dure environ 2 heures, de préférence environ 1 heure. Elle peut être réalisée à une pression allant de la pression atmosphérique à 5 bars, de préférence à pression atmosphérique.

S'il reste du solvant, celui-ci est ensuite éliminé par exemple par chauffage de manière à le faire évaporer, ou par aspiration, ou par séchage au moyen d'un flux gazeux éventuellement en présence de chauffage. En tout état de cause, l'élimination du solvant résiduel le cas échéant doit être effectuée de manière à conserver l'intégralité, ou au moins une partie substantielle, de l'additif déposé à la surface du catalyseur, et éviter que celui-ci ne se décompose.

Il est également possible de procéder à une étape de maturation du catalyseur, avant ou après élimination de l'excès de solvant, à température ambiante ou en présence d'un léger chauffage pouvant aller jusqu'à 100°C.

Cette maturation peut être réalisée pendant une durée allant de 0,1 à 100 heures, de préférence de 0,2 à 20 heures, de manière plus préférée de 1 à 10 heures.

D'une manière générale, la seconde étape doit être réalisée dans des conditions permettant le dépôt à la surface du catalyseur d'une quantité suffisante d'additif de formule (I), de manière à obtenir un niveau d'activité satisfaisant.

De préférence, à l'issue de la seconde étape, la quantité totale d'additif(s) de formule (I) déposé(s) à la surface du catalyseur, exprimée comme étant le ratio de la quantité molaire d'additif(s) de formule (I) sur la quantité molaire totale de métaux des groupes VIII et VIB, est d'au moins 0,01 moles d'additif(s) par mole de métaux des groupes VIII et VIB. De préférence, cette quantité est comprise entre 0,01 et 10 moles d'additif(s) par mole de métaux des groupes VIII et VIB, plus préférentiellement entre 0,05 et 5 moles et de manière encore plus préférée entre 0,1 et 1,5 moles.

Au cours de la seconde étape il est également possible de déposer, en plus du (des) additif(s) de formule (I), un ou plusieurs additifs organiques ou inorganiques additionnels, soit simultanément au dépôt du (des) additif(s) de formule (I), soit avant et/ou après le dépôt du (des) additif(s) de formule (I). Un tel dépôt additionnel doit toutefois être réalisé dans les conditions telles qu'il ne nuise ni au dépôt de l'additif de formule (I), ni à son activité.

Le procédé de régénération selon l'invention peut, outre les deux étapes décrites ci-avant, comprendre en option une ou plusieurs étapes additionnelles, effectuées avant et/ou après lesdites première et seconde étapes, ou encore intercalées entre ces deux étapes.

Ainsi, le procédé selon l'invention peut avantageusement comprendre, avant ladite première étape, une étape d'élimination des hydrocarbures et impuretés libres que renferme le catalyseur.

Cette étape peut s'effectuer par lavage du catalyseur. Un tel lavage peut être effectué au moyen d'un solvant adéquat tel que par exemple le toluène, les xylènes, l'acétone, ou tout autre solvant approprié.

Cette étape peut également, de manière avantageuse, être effectuée par stripage au moyen d'un flux de gaz, par exemple de l'air, de la vapeur d'eau, du dioxyde de carbone, un gaz inerte tel que l'azote, à une température par exemple comprise entre 100 et 450°C.

Le procédé selon l'invention peut également comprendre, après ladite seconde étape, une étape de séchage du catalyseur, qui peut être effectuée à une température allant de 80°C à 350°C, de préférence de 100°C à 200°C, à l'air libre ou en présence d'un flux gazeux d'air, de gaz inerte tel que l'azote, ou de tout autre gaz approprié.

Le procédé selon l'invention peut également comprendre en option, après ladite seconde étape, une étape de calcination du catalyseur, qui peut être effectuée à une température allant de 300°C à 500°C, à l'air libre ou en présence d'un flux gazeux d'air, de gaz inerte tel que l'azote, ou de tout autre gaz approprié.

Lorsque le procédé selon l'invention comprend déjà une étape de séchage du catalyseur, l'étape de calcination (s'il y en a une) est alors effectuée après celle-ci.

De préférence, à l'issue du procédé selon l'invention et avant toute étape de sulfuration proprement dite, la quantité de soufre présente à la surface du catalyseur va de 0,5 à 8 % en poids, de préférence de 1 à 5 % en poids, par rapport au poids total du catalyseur. De manière plus préférée, la quantité de soufre présente à la surface du catalyseur va de 2 à 3% en poids, par rapport au poids total du catalyseur.

A l'issue du procédé selon l'invention, immédiatement avant l'emploi du catalyseur recyclé, il est avantageux de procéder à une sulfuration finale classique par mise en contact du catalyseur avec un ou plusieurs agents de sulfuration. Cette sulfuration peut être précédée ou accompagnée d'une activation en présence d'hydrogène.

Les agents de sulfuration correspondant sont les composés classiques, choisis par exemple choisis parmi le sulfure d'hydrogène, le soufre élémentaire, le $CS_2$, les composés organiques soufrés tels que les mercaptans, les sulfures, les disulfures, les polysulfures, les coupes d'hydrocarbures contenant naturellement des composés soufrés, et/ou enrichies en composés soufrés.

Cependant, selon la présente invention, la durée et/ou l'intensité de la sulfuration peuvent être sensiblement diminuées par rapport aux procédés de l'art antérieur puisque le catalyseur se présente sous forme déjà pré-sulfurée. Il en résulte un gain de temps, et une économie en agents de sulfuration qui sont pour la plupart des composés agressifs et polluants.

Lorsque le catalyseur régénéré est employé dans un procédé de traitement d'une charge d'hydrocarbures contenant des composés soufrés, l'on peut également réaliser l'étape d'activation du catalyseur directement avec la charge sans lui ajouter de composés sulfurés, en ne comptant que sur le soufre contenu dans la charge pour compléter la sulfuration du catalyseur à la stoechiométrie nécessaire. Ceci constitue un mode de réalisation particulièrement avantageux de l'invention.

Le procédé selon la présente invention peut être réalisé in situ, c'est-à-dire directement au sein de l'unité dans laquelle le catalyseur est employé.

Selon un mode de réalisation préféré, il est réalisé ex situ, c'est-à-dire après déchargement du catalyseur hors de l'unité.

Le procédé selon l'invention peut également comprendre certaines étapes réalisées in situ, les autres étant réalisées ex situ.

Le procédé selon la présente invention permet de régénérer tout catalyseur usé d'hydrotraitement et/ou d'hydroconversion d'hydrocarbures dans les domaines du raffinage et de la pétrochimie.

Il s'agit de catalyseurs contenant au moins un métal du groupe VIII de la classification périodique des éléments, tels que par exemple le cobalt, le nickel, le fer, le platine, le palladium, associé à au moins un métal du groupe VIB tels que par exemple le molybdène, le tungstène, le chrome. La teneur en métal ou métaux du groupe VIII est généralement comprise entre 0,1 et 10% en poids par rapport au poids total du catalyseur, et la teneur en métal ou métaux du groupe VIB est généralement comprise entre 1 et 20% en poids par rapport au poids total du catalyseur.

Ces métaux sont déposés sur un support à base d'un ou plusieurs oxydes minéraux réfractaires tels que notamment les alumines, les silices, les silice-alumines, les zéolithes, les zircones, les oxydes de titane et de bore, et les mélanges de tels oxydes.

Le procédé selon l'invention est particulièrement approprié à la régénération de catalyseurs contenant les associations métalliques CoMo, NiMo, NiW, NiCoMo, déposées sur des supports à base d'alumine.

Les catalyseurs usés peuvent contenir, ou avoir contenu, à l'état neuf ou à l'issue d'un précédent recyclage, un ou plusieurs additifs tels que des additifs organiques, des composés halogénés, borés, phosphorés.

Les catalyseurs intervenant dans le procédé selon l'invention se présentent généralement sous forme de particules solides de petite taille telles que des billes, des particules plus ou moins cylindriques, des extrudés. Ils présentent une surface spécifique, mesurée par la méthode BET, généralement comprise entre 100 et 300 $m^2/g$, un volume poreux, déterminé par adsorption d'azote, allant de 0,25 à 1 ml/g, et un diamètre de pores moyen, déterminé par adsorption d'azote, allant de 7 à 20 nm.

La présente invention concerne également les catalyseurs régénérés obtenus au moyen du procédé selon la revendication 7. Ces catalyseurs présentent un niveau d'activité particulièrement satisfaisant, et présentent l'avantage supplémentaire d'être pré-sulfurés, comme cela a été exposé ci-avant.

La présente invention a également pour objet l'utilisation de l'acide 2-hydroxy 4-méthylthiobutanoïque, afin d'augmenter l'activité d'un catalyseur contenant au moins un métal du groupe VIII et au moins un métal du groupe VIB déposés sur un support d'oxyde réfractaire.

Le catalyseur intervenant dans cette utilisation peut être un catalyseur neuf, ou un catalyseur usé qui a préalablement été régénéré par élimination au moins partielle du coke.

Les exemples qui suivent sont donnés à titre purement illustratif de la présente invention.

## EXEMPLES

### Exemple 1 :

Cet exemple a été réalisé à partir d'un catalyseur commercial usé, contenant 23,1% en poids de $MoO_3$, 4,2% en poids de CoO, 12,4% en poids de carbone et 14,5% en poids de soufre.

Une portion de ce catalyseur usé a été soumise à un traitement thermique à une température de 400°C sous air, pendant une durée de 2 heures, pour obtenir le catalyseur traité T1.

La procédure consiste à placer 100g (équivalent poids sec) de catalyseur dans 5 coupelles de verre, introduire celles-ci dans un four à moufle préchauffé à 300°C, rester 1 heure à cette température, porter le four à 400°C et rester

2 heures à cette température.

Une portion identique de ce même catalyseur usé a été soumise à un traitement thermique selon la même procédure, mais avec une température de 520°C pendant une durée de 2 heures pour le palier final, pour obtenir le catalyseur traité T2.

Les caractéristiques des catalyseurs T1 et T2 figurent dans le tableau ci-dessous :

| | T1 | T2 |
|---|---|---|
| Teneur en carbone (% en poids) | 1,3 | 0,2 |
| Teneur en soufre (% en poids) | 0,4 | 0,2 |
| Surface spécifique ($m^2/g$) | 175 | 181 |

100 g du catalyseur T1 ont été imprégnés à saturation du volume poreux par une solution constituée de 10 g de polyéthylène glycol 200 (PEG-200) et de 33 g d'eau déminéralisée.

Après imprégnation, l'échantillon a été soumis à une étape de maturation pendant 8 heures à une température de 70°C, puis séché sous azote dans une étuve à 140°C, pour obtenir le catalyseur régénéré comparatif A1.

100 g du catalyseur T1 ont été imprégnés à saturation du volume poreux par une solution constituée de 14,2 g d'une solution commerciale à 88% en poids d'acide 2-hydroxy 4-méthylthiobutanoïque (soit 12,5 g d'acide 2-hydroxy 4-méthylthiobutanoïque) et de 36 g d'eau déminéralisée.

Après imprégnation, l'échantillon a été soumis à une étape de maturation pendant 8 heures à une température de 70°C, puis séché sous azote dans une étuve à 140°C, pour obtenir le catalyseur régénéré selon l'invention A2. Ce catalyseur contient 4,2 % en poids de carbone, et 2,3 % en poids de soufre.

100 g du catalyseur T2 ont été imprégnés à saturation du volume poreux par une solution constituée de 14,2 g d'une solution commerciale à 88% en poids d'acide 2-hydroxy 4-méthylthiobutanoïque (soit 12,5 g d'acide 2-hydroxy 4-méthylthiobutanoïque) et de 36 g d'eau déminéralisée.

Après imprégnation, l'échantillon a été soumis à une étape de maturation pendant 8 heures à une température de 70°C, puis séché sous azote dans une étuve à 140°C, pour obtenir le catalyseur régénéré selon l'invention A3. Ce catalyseur contient 4,4 % en poids de carbone, et 2,4 % en poids de soufre.

Les activités en hydrodésulfuration d'hydrocarbures des catalyseurs T1, T2, et A1 à A3 ont alors été comparées, en suivant le protocole décrit ci-après.

La charge utilisée est un gazole "straight run", qui présente les caractéristiques suivantes :

| | |
|---|---|
| Teneur en soufre (ppm en poids) | 12200 |
| Teneur en azote (ppm en poids) | 94 |
| Densité (g/mL) | 0,837 |

Pour chaque échantillon, le volume de catalyseur employé pour le test était de 10mL.

Avant le test d'hydrodésulfuration proprement dit, chaque échantillon de catalyseur a été activé par sulfuration après une période de mouillage de 3 heures à température ambiante par le gazole, additivé de 2,5% en poids de soufre par du disulfure de diméthyle (DMDS). La procédure de sulfuration a été effectuée avec une vitesse volumique horaire (VVH) de $3h^{-1}$, avec un rapport $H_2$/gazole additivé de 200 (NL/h)/(L/h) et une pression totale de 3MPa (30bars). Une première rampe de température de la température ambiante à 250°C a été effectuée avec une rampe de 30°C/h, suivie d'un palier de 8h à 250°C. Une deuxième rampe de température de 250°C à 320°C a ensuite été réalisée avec une rampe de 20°C/h, suivie d'un palier de 5h à 320°C.

La charge de test a alors été injectée pour démarrer le test proprement dit. Les conditions de test étaient les suivantes : pression de 3 MPa , rapport $H_2$/gazole de 300, VVH = $2h^{-1}$, température de 340 à 350°C.

La teneur en soufre de la charge a été mesurée en sortie d'unité au moyen d'un analyseur par fluorescence UV. Les constantes apparentes de la réaction de désulfuration ont été calculées selon la formule E1 ci-après :

$$K_v = \left(\frac{1}{\alpha - 1}\right)\left(\frac{1}{S^{\alpha-1}} - \frac{1}{S_0^{\alpha-1}}\right) * VVH \qquad \text{(E1)}$$

avec

$K_v$ = constante apparente de réaction
$\alpha$ = ordre de la réaction (considéré égal à 1,2)
S = teneur en soufre des effluents
$S_0$ = teneur en soufre de la charge
VVH = vitesse volumique horaire de la charge liquide

Les performances de chaque échantillon ont été évaluées par rapport à celle d'un catalyseur de référence. Pour cela, l'activité relative volumique (notée RVA pour "Relative Volume Activity") a été calculée selon la formule E2 suivante :

$$RVA = \frac{Kv(\acute{e}chantillon)}{Kv(r\acute{e}f\acute{e}rence)} \text{ x } 100 \qquad \text{(E2)}$$

Comme référence, a été attribuée la valeur $K_v$ de 100 au catalyseur traité T2.
Les résultats obtenus sont rassemblés dans le tableau ci-dessous:

| Catalyseur | Température du traitement thermique | Additif | RVA (%) |
|---|---|---|---|
| Catalyseur traité T1 | 400°C | Non | 106 |
| Catalyseur traité T2 | 520°C | Non | 100 |
| Catalyseur régénéré comparatif A1 | 400°C | PEG-200 | 129 |
| Catalyseur régénéré selon l'invention A2 | 400°C | Acide 2-hydroxy 4-méthylthiobutanoïque | 142 |
| Catalyseur régénéré selon l'invention A3 | 520°C | Acide 2-hydroxy 4-méthylthiobutanoïque | 155 |

Les résultats figurant dans le tableau ci-dessus montrent que les catalyseurs A2 et A3 régénérés au moyen du procédé selon l'invention sont plus actifs que les catalyseurs traités T1 et T2, et que le catalyseur régénéré comparatif A1.

Exemple 2 :

Les catalyseurs régénérés A4 et A5 selon l'invention ont été préparés d'une manière identique aux catalyseurs respectifs A2 et A3 de l'exemple 1 ci-avant, mais en doublant la quantité d'additif (acide 2-hydroxy 4-méthylthiobutanoïque) employé lors de la seconde étape, de manière à augmenter la teneur en soufre du catalyseur régénéré (présulfuration) :
100 g du catalyseur T1 ont été imprégnés à saturation du volume poreux par une solution constituée de 28,4 g d'une solution commerciale à 88% en poids d'acide 2-hydroxy 4-méthylthiobutanoïque (soit 25 g d'acide 2-hydroxy 4-méthylthiobutanoïque) et de 24,5 g d'eau déminéralisée.
Après imprégnation, l'échantillon a été soumis à une étape de maturation pendant 8 heures à une température de 70°C, puis séché sous azote dans une étuve à 140°C, pour obtenir le catalyseur régénéré selon l'invention A4. Ce catalyseur contient 8,2 % en poids de carbone, et 4,3 % en poids de soufre.
100 g du catalyseur T2 ont été imprégnés à saturation du volume poreux par une solution constituée de 28,4 g d'une solution commerciale à 88% en poids d'acide 2-hydroxy 4-méthylthiobutanoïque (soit 25 g d'acide 2-hydroxy 4-méthylthiobutanoïque) et de 24,5 g d'eau déminéralisée.
Après imprégnation, l'échantillon a été soumis à une étape de maturation pendant 8 heures à une température de 70°C, puis séché sous azote dans une étuve à 140°C, pour obtenir le catalyseur régénéré selon l'invention A5. Ce catalyseur contient 8,1 % en poids de carbone, et 4,5 % en poids de soufre.
Les activités en hydrodésulfuration d'hydrocarbures des catalyseurs A4 et A5 ont alors été testées, en suivant un protocole identique à celui décrit dans l'exemple 1 ci-avant, à l'exception du traitement d'activation par sulfuration, qui est effectué avec le même gazole que dans l'exemple 1 mais non additivé au DMDS. Pour le reste, la procédure de sulfuration reste strictement identique à celle de l'exemple 1, ainsi que le test d'hydrodésulfuration en lui-même.
Les résultats obtenus sont rassemblés dans le tableau ci-dessous:

| Catalyseur | Température du traitement thermique | Additif | RVA (%) |
|---|---|---|---|
| Catalyseur régénéré selon l'invention A4 | 400°C | Acide 2-hydroxy 4-méthylthiobutanoïque | 139 |
| Catalyseur régénéré selon l'invention A5 | 520°C | Acide 2-hydroxy 4-méthylthiobutanoïque | 150 |

Les résultats figurant dans le tableau ci-dessus montrent que les catalyseurs A4 et A5, régénérés au moyen du procédé selon l'invention en employant une quantité plus importante d'acide 2-hydroxy 4-méthylthiobutanoïque, présentent une activité comparable à celle des catalyseurs A2 et A3, et supérieure à celle du catalyseur comparatif A1.

Ainsi, le procédé selon l'invention permet de préparer des catalyseurs dont l'activation ne nécessite pas l'emploi d'agents de sulfuration spécifiques, mais peut au contraire être effectuée directement avec le gazole à désulfurer.

**Revendications**

1. Procédé de régénération d'un catalyseur contenant au moins un métal du groupe VIII et au moins un métal du groupe VIB déposés sur un support d'oxyde réfractaire, comprenant :

   - au moins une première étape de traitement thermique du catalyseur, en présence d'oxygène et à une température allant de 350°C à 550°C ;
   - au moins une seconde étape de dépôt, à la surface du catalyseur, d'un ou plusieurs additif(s) de formule (I) :

   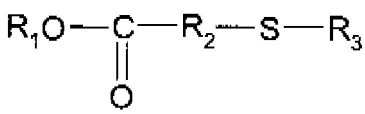

   (I)

   dans laquelle :

   - $R_1$ désigne un atome d'hydrogène ou un groupement hydrocarboné linéaire ou ramifié, saturé ou insaturé, comprenant de 1 à 30 atomes de carbone;
   - $R_2$ désigne un groupement hydrocarboné divalent linéaire ou ramifié, saturé ou insaturé, comprenant de 1 à 30 atomes de carbone, et pouvant en option contenir un ou plusieurs héréroatome(s) choisi(s) parmi les atomes d'oxygène et d'azote;
   - $R_3$ désigne un groupement hydrocarboné linéaire ou ramifié, saturé ou insaturé, comprenant de 1 à 30 atomes de carbone.

2. Procédé selon la revendication précédente, **caractérisé en ce que** ladite première étape est réalisée à une température inférieure ou égale à 530°C.

3. Procédé selon la revendication 1, **caractérisé en ce que** ladite première étape est effectuée, en totalité ou en partie, à une température supérieure à 500°C, et inférieure ou égale à 550°C.

4. Procédé selon l'une quelconque des revendications précédentes, **caractérisé en ce que** dans la formule (I), $R_1$ désigne un atome d'hydrogène ou un groupement hydrocarboné linéaire ou ramifié, saturé ou insaturé, comprenant de 1 à 8 atomes de carbone, et de préférence de 1 à 4 atomes de carbone.

5. Procédé selon l'une quelconque des revendications précédentes, **caractérisée en ce que** dans la formule (I), $R_2$ désigne un groupement hydrocarboné divalent linéaire ou ramifié, saturé ou insaturé, comprenant de 1 à 8 atomes de carbone, de préférence de 1 à 6 atomes de carbone, et pouvant être substitué par un ou plusieurs groupements -OH, -OR, $-NH_2$, -NHR, -NRR', avec R et R' désignant des groupements alkyle comprenant de 1 à 4 atomes de carbone et de préférence 1 ou 2 atomes de carbone.

**6.** Procédé selon l'une quelconque des revendications précédentes, **caractérisé en ce que** dans la formule (I), $R_3$ désigne un groupement hydrocarboné linéaire ou ramifié, saturé ou insaturé, comprenant de 1 à 8 atomes de carbone, et de préférence de 1 à 4 atomes de carbone.

**7.** Procédé selon l'une quelconque des revendications précédentes, **caractérisé en ce que** l'additif de formule (I) est l'acide 2-hydroxy 4-méthylthiobutanoïque.

**8.** Procédé selon l'une quelconque des revendications précédentes, caractérisé en cc que le ou les additif(s) de formule (I) est (sont) déposé(s) sur le catalyseur par imprégnation avec une ou plusieurs solution(s) aqueuse du (de ces) additif(s).

**9.** Procédé selon l'une quelconque des revendications précédentes, caractérisé en cc que, à l'issue de ladite seconde étape, la quantité totale d'additif(s) de formule (I) déposé(s) à la surface du catalyseur, exprimée comme étant le ratio de la quantité molaire d'additif(s) de formule (I) sur la quantité molaire totale de métaux des groupes VIII et VIB, est d'au moins 0,01 moles d'additif(s) par mole de métaux des groupes VIII et VIB.

**10.** Procédé selon la revendication précédente, **caractérisé en ce que**, à l'issue de ladite seconde étape, la quantité totale d'additif(s) de formule (I) déposé(s) à la surface du catalyseur est comprise entre 0,01 et 10 moles d'additif(s) par mole de métaux des groupes VIII et VIB.

**11.** Procédé selon l'une quelconque des revendications précédentes, **caractérisé en ce qu'**il comprend une ou plusieurs étapes additionnelles, effectuées avant et/ou après lesdites première et seconde étapes, ou encore intercalées entre ces deux étapes,

**12.** Procédé selon la revendication précédente, caractérisé en qu'il comprend, avant ladite première étape, une étape d'élimination des hydrocarbures et impuretés libres, par lavage au solvant du catalyseur, ou par stripage au moyen d'un flux de gaz.

**13.** Procédé selon l'une quelconque des revendications 11 et 12, **caractérisé en ce qu'**il comprend, après ladite seconde étape, une étape de séchage du catalyseur, effectuée à une température allant de 80°C à 350°C, à l'air libre ou en présence d'un flux gazeux d'air, de gaz inerte tel que l'azote, ou de tout autre gaz approprié.

**14.** Procédé selon l'une quelconque des revendications précédentes, **caractérisé en ce qu'**il est réalisé ex situ, c'est-à-dire après déchargement du catalyseur hors de l'unité.

**15.** Procédé selon l'une quelconque des revendications précédentes, **caractérisé en ce que**, à l'issue de ce procédé et avant toute étape de sulfuration proprement dite, la quantité de soufre présente à la surface du catalyseur va de 0,5 à 8 % en poids, de préférence de 1 à 5 % en poids, par rapport au poids total du catalyseur.

**16.** Catalyseur régénéré obtenu au moyen du procédé selon la revendication 7.

**17.** Utilisation, afin d'augmenter l'activité d'un catalyseur contenant au moins un métal du groupe VIII et au moins un métal du groupe VIB déposés sur un support d'oxyde réfractaire, d'un additif qui est l'acide 2-hydroxy-4-methylthiobutanoïque.

**Patentansprüche**

**1.** Verfahren zur Regeneration eines Katalysators, der mindestens ein Metall der Gruppe VIII und mindestens ein Metall der Gruppe VIB, die auf einem Träger aus refraktärem Oxid abgeschieden sind, enthält, umfassend:

- mindestens einen ersten Schritt der thermischen Behandlung des Katalysators in Gegenwart von Sauerstoff und bei einer Temperatur im Bereich von 350 °C bis 550 °C;
- mindestens einen zweiten Schritt der Abscheidung eines oder mehrerer Additive der Formel (I):

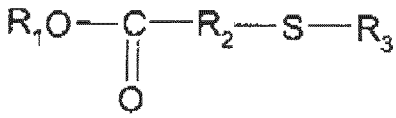

(I)

auf der Oberfläche des Katalysators, wobei:

$R_1$ für ein Wasserstoffatom oder eine gesättigte oder ungesättigte, lineare oder verzweigte Kohlenwasserstoffgruppe, die 1 bis 30 Kohlenstoffatome aufweist, steht;
$R_2$ für eine gesättigte oder ungesättigte, lineare oder verzweigte zweiwertige Kohlenwasserstoffgruppe, die 1 bis 30 Kohlenstoffatome aufweist und
gegebenenfalls ein oder mehrere Heteroatome, die aus Sauerstoff- und Stickstoffatomen ausgewählt sind, enthalten kann, steht;
$R_3$ für eine gesättigte oder ungesättigte, lineare oder verzweigte Kohlenwasserstoffgruppe, die 1 bis 30 Kohlenstoffatome aufweist, steht.

**2.** Verfahren nach dem vorhergehenden Anspruch, **dadurch gekennzeichnet, dass** der erste Schritt bei einer Temperatur kleiner oder gleich 530 °C durchgeführt wird.

**3.** Verfahren nach Anspruch 1, **dadurch gekennzeichnet, dass** der erste Schritt vollständig oder teilweise bei einer Temperatur von mehr als 500 °C und kleiner oder gleich 550 °C durchgeführt wird.

**4.** Verfahren nach einem der vorhergehenden Ansprüche, **dadurch gekennzeichnet, dass** in der Formel (I) $R_1$ für ein Wasserstoffatom oder eine gesättigte oder ungesättigte, lineare oder verzweigte Kohlenwasserstoffgruppe, die 1 bis 8 Kohlenstoffatome und vorzugsweise 1 bis 4 Kohlenstoffatome aufweist, steht.

**5.** Verfahren nach einem der vorhergehenden Ansprüche, **dadurch gekennzeichnet, dass** in der Formel (I) $R_2$ für eine gesättigte oder ungesättigte, lineare oder verzweigte zweiwertige Kohlenwasserstoffgruppe, die 1 bis 8 Kohlenstoffatome und vorzugsweise 1 bis 6 Kohlenstoffatome aufweist und gegebenenfalls durch eine oder mehrere -OH-, -OR-, $-NH_2-$, -NHR- oder -NRR'-Gruppen substituiert sein kann, steht, wobei R und R' für Alkylgruppen, die 1 bis 4 Kohlenstoffatome und vorzugsweise 1 oder 2 Kohlenstoffatome aufweisen, stehen.

**6.** Verfahren nach einem der vorhergehenden Ansprüche, **dadurch gekennzeichnet, dass** in der Formel (I) $R_3$ für eine gesättigte oder ungesättigte, lineare oder verzweigte Kohlenwasserstoffgruppe, die 1 bis 8 Kohlenstoffatome und vorzugsweise 1 bis 4 Kohlenstoffatome aufweist, steht.

**7.** Verfahren nach einem der vorhergehenden Ansprüche, **dadurch gekennzeichnet, dass** es sich bei dem Additiv der Formel (I) um 2-Hydroxy-4-methylthio-butansäure handelt.

**8.** Verfahren nach einem der vorhergehenden Ansprüche, **dadurch gekennzeichnet, dass** das Additiv bzw. die Additive der Formel (I) durch Imprägnieren mit einer oder mehreren wässrigen Lösungen des Additivs bzw. der Additive auf den Katalysator abgeschieden wird bzw. werden.

**9.** Verfahren nach einem der vorhergehenden Ansprüche, **dadurch gekennzeichnet, dass** am Ende des zweiten Schritts die Gesamtmenge von Additiv(en) der Formel (I), das bzw. die auf der Oberfläche des Katalysators abgeschieden ist bzw. sind, ausgedrückt als das Verhältnis der molaren Menge von Additiv(en) der Formel (I) zur gesamten molaren Menge von Metallen der Gruppen VIII und VIB, bei mindestens 0,01 mol Additiv(en) pro Mol Metalle der Gruppen VIII und VIB liegt.

**10.** Verfahren nach dem vorhergehenden Anspruch, **dadurch gekennzeichnet, dass** am Ende des zweiten Schritts die Gesamtmenge von Additiv(en) der Formel (I), das bzw. die auf der Oberfläche des Katalysators abgeschieden ist bzw. sind, zwischen 0,01 und 10 mol Additiv(en) pro Mol Metalle der Gruppen VIII und VIB liegt.

**11.** Verfahren nach einem der vorhergehenden Ansprüche, **dadurch gekennzeichnet, dass** es einen oder mehrere zusätzliche Schritte umfasst, die vor und/oder nach dem ersten und zweiten Schritt oder auch dazwischen durchgeführt werden.

**12.** Verfahren nach dem vorhergehenden Anspruch, **dadurch gekennzeichnet, dass** es vor dem ersten Schritt einen Schritt der Entfernung von freien Verunreinigungen und Kohlenwasserstoffen durch Waschen des Katalysators mit Lösungsmittel oder durch Strippen mit einem Gasstrom umfasst.

**13.** Verfahren nach einem der Ansprüche 11 und 12, **dadurch gekennzeichnet, dass** es nach dem zweiten Schritt einen Schritt der Trocknung des Katalysators umfasst, der bei einer Temperatur im Bereich von 80 °C bis 350 °C an der Luft oder in Gegenwart eines Gasstroms von Luft, Inertgas wie Stickstoff oder einem anderen geeigneten Gas durchgeführt wird.

**14.** Verfahren nach einem der vorhergehenden Ansprüche, **dadurch gekennzeichnet, dass** es teilweise ex situ, d. h. nach dem Austragen des Katalysators aus der Einheit, durchgeführt wird.

**15.** Verfahren nach einem der vorhergehenden Ansprüche, **dadurch gekennzeichnet, dass** am Ende dieses Verfahrens und vor jeglicher richtiger Sulfurierungsstufe die Schwefelmenge auf der Oberfläche des Katalysators im Bereich von 0,5 bis 8 Gew.-%, vorzugsweise von 1 bis 5 Gew.-%, bezogen auf das Gesamtgewicht des Katalysators, liegt.

**16.** Regenerierter Katalysator, erhalten mit dem Verfahren nach Anspruch 7.

**17.** Verwendung eines Additivs, bei dem es sich um 2-Hydroxy-4-methylthiobutansäure handelt, zur Erhöhung der Aktivität eines Katalysators, der mindestens ein Metall der Gruppe VIII und mindestens ein Metall der Gruppe VIB, die auf einem Träger aus refraktärem Oxid abgeschieden sind, enthält.

## Claims

**1.** Process for the regeneration of a catalyst comprising at least one metal from Group VIII and at least one metal from Group VIb which are deposited on a refractory oxide support, comprising:

- at least one first stage of heat treatment of the catalyst in the presence of oxygen and at a temperature ranging from 350°C to 550°C;
- at least one second stage of deposition, at the surface of the catalyst, of one or more additive(s) of formula (I):

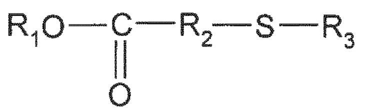

(I)

in which:

- $R_1$ denotes a hydrogen atom or a saturated or unsaturated and linear or branched hydrocarbon group comprising from 1 to 30 carbon atoms;
- $R_2$ denotes a saturated or unsaturated and linear or branched divalent hydrocarbon group comprising from 1 to 30 carbon atoms which can optionally comprise one or more heteroatom(s) chosen from oxygen and nitrogen atoms;
- $R_3$ denotes a saturated or unsaturated and linear or branched hydrocarbon group comprising from 1 to 30 carbon atoms.

**2.** Process according to the preceding claim, **characterized in that** the said first stage is carried out at a temperature of less than or equal to 530°C.

**3.** Process according to Claim 1, **characterized in that** the said first stage is carried out, in all or in part, at a temperature of greater than 500°C and less than or equal to 550°C.

**4.** Process according to any one of the preceding claims, **characterized in that**, in the formula (I), $R_1$ denotes a hydrogen atom or a saturated or unsaturated and linear or branched hydrocarbon group comprising from 1 to 8 carbon atoms and preferably from 1 to 4 carbon atoms.

**5.** Process according to any one of the preceding claims, **characterized in that**, in the formula (I), $R_2$ denotes a

saturated or unsaturated and linear or branched divalent hydrocarbon group comprising from 1 to 8 carbon atoms, preferably from 1 to 6 carbon atoms which can be substituted by one or more -OH, -OR, $-NH_2$, -NHR or -NRR' groups, with R and R' denoting alkyl groups comprising from 1 to 4 carbon atoms and preferably 1 or 2 carbon atoms.

**6.** Process according to any one of the preceding claims, **characterized in that**, in the formula (I), $R_3$ denotes a saturated or unsaturated and linear or branched hydrocarbon group comprising from 1 to 8 carbon atoms and preferably from 1 to 4 carbon atoms.

**7.** Process according to any one of the preceding claims, **characterized in that** the additive of formula (I) is 2-hydroxy-4-methylthiobutanoic acid.

**8.** Process according to any one of the preceding claims, **characterized in that** the additive or additives of formula (I) is (are) deposited on the catalyst by impregnation with one or more aqueous solution(s) of the (of these) additive(s).

**9.** Process according to any one of the preceding claims, **characterized in that**, on conclusion of the said second stage, the total amount of additive(s) of formula (I) deposited at the surface of the catalyst, expressed as being the ratio of the molar amount of additive(s) of formula (I) to the total molar amount of metals from Groups VIII and VIb, is at least 0.01 mol of additive (s) per mole of metals from Groups VIII and VIb.

**10.** Process according to the preceding claim, **characterized in that**, on conclusion of the said second stage, the total amount of additive(s) of formula (I) deposited at the surface of the catalyst is between 0.01 and 10 mol of additive(s) per mole of metals from Groups VIII and VIb.

**11.** Process according to any one of the preceding claims, **characterized in that** it comprises one or more additional stages carried out before and/or after the said first and second stages or also intercalated between these two stages.

**12.** Process according to the preceding claim, **characterized in that** it comprises, before the said first stage, a stage of removal of the free impurities and hydrocarbons by washing the catalyst with a solvent or by stripping by means of a stream of gas.

**13.** Process according to either one of Claims 11 and 12, **characterized in that** it comprises, after the said second stage, a stage of drying the catalyst carried out at a temperature ranging from 80°C to 350°C, in the open air or in the presence of a gas stream of air, of an inert gas, such as nitrogen, or of any other appropriate gas.

**14.** Process according to any one of the preceding claims, **characterized in that** it is carried out ex situ, that is to say after discharging the catalyst from the unit.

**15.** Process according to any one of the preceding claims, **characterized in that**, on conclusion of this process and before any stage of sulphurization proper, the amount of sulphur present at the surface of the catalyst ranges from 0.5 to 8% by weight, preferably from 1 to 5% by weight, with respect to the total weight of the catalyst.

**16.** Regenerated catalyst obtained by means of the process according to Claim 7.

**17.** Use, in order to increase the activity of a catalyst comprising at least one metal from Group VIII and at least one metal from Group VIb which are deposited on a refractory oxide support, of an additive which is 2-hydroxy-4-methylthiobutanoic acid.

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description

- WO 9641848 A
- EP 0882503 A
- WO 0102092 A
- US 5017535 A